# EUROPÄISCHE PATENTSCHRIFT

(11) **EP 4 360 808 B1**
(45) Veröffentlichungstag und Bekanntmachung des Hinweises auf die Patenterteilung: **11.06.2025**
(21) Anmeldenummer: 23200140.4
(22) Anmeldetag: 27.09.2023
(51) Int. Cl.: B25B 27/00, B21J 15/02, B25B 27/02, G06Q 10/087, B21J 15/04, B21J 15/26, B21J 15/28

(54) **VERFAHREN ZUR VERWENDUNG EINER HANDHALTBAREN ZUG- UND DRUCKVORRICHTUNG ZUR REPARATUR VON KRAFTFAHRZEUGBAUTEILEN**
METHOD FOR USING A HANDHELD PULLING AND PRESSING DEVICE FOR REPAIRING MOTOR VEHICLE COMPONENTS
PROCÉDÉ D'UTILISATION D'UN DISPOSITIF DE TRACTION ET DE PRESSION PORTATIF POUR LA RÉPARATION DE COMPOSANTS DE VÉHICULE AUTOMOBILE

(30) Priorität: 28.10.2022 DE 102022128654
(43) Veröffentlichungstag der Anmeldung: 01.05.2024
(73) Patentinhaber: TKR Spezialwerkzeuge GmbH, 58285 Gevelsberg (DE)
(72) Erfinder: Kreischer, Torsten, 58300 Wetter (DE); Weyland, Thorsten, 58313 Herdecke (DE)
(74) Vertreter: Kalkoff & Partner Patentanwälte mbB

(56) Entgegenhaltungen:
- EP-A1- 3 528 187
- EP-B1- 2 732 922
- DE-A1- 102016 116 879
- US-A1- 2017 173 662

## Beschreibung

Die Erfindung betrifft ein Verfahren zur Verwendung einer handhaltbaren Zug- und Druckvorrichtung zur Reparatur von Kraftfahrzeugbauteilen sowie ein System zur Durchführung des Verfahrens.

Handhaltbare Zugvorrichtungen, d.h. solche Vorrichtungen, die sich von einer Person mobil einsetzen lassen, wie bspw. handhaltbare Nietgeräte zum Setzen von Blindnietelementen, wie Blindnieten und Blindnietmuttern, die eine Antriebseinheit mit einem elektromotorisch angetriebenen Gewindetrieb aufweisen, sind in vielfältigen Ausgestaltungen aus dem Stand der Technik bekannt. Darüber hinaus existieren auch elektrische Pressvorrichtungen, die ebenfalls unter Verwendung eines Gewindetriebs die durch einen Elektromotor erzeugte Drehbewegung in eine lineare Bewegung des Presswerkzeugs umwandeln, bspw. um Stanzprozesse durchzuführen oder Stanzniete zu setzen. Ein Verfahren zur Verwendung einer handhaltbaren Zug- und Druckvorrichtung zur Reparatur von Kraftfahrzeugbauteilen wird z.B. in der DE 10 2016 116879 A1 offenbart.

Die vorstehend beschriebenen Niet- und Pressvorrichtungen kommen bspw. in Werkstattbetrieben, insbesondere in Kraftfahrzeugwerkstätten, im Rahmen von Reparaturarbeiten an der Karosserie von Fahrzeugen, defekter Anlagen, Geräten, Vorrichtungen oder dergleichen, zum Einsatz. Die Schwierigkeit bei der Reparatur von defekten Kraftfahrzeugbauteile, insbesondere defekten Karosseriebauteilen, beispielsweise Nieten oder defekten Fahrzeugelektronikbauteilen, z.B. gecrimpten Kabeln, besteht dabei darin, dass aufgrund der Vielzahl unterschiedlicher Fahrzeuge und Fahrzeugvarianten eine Vielzahl unterschiedlicher Kraftfahrzeugbauteile zum Einsatz kommen. Diese Vielfalt bedingt eine hohe Herausforderung bei der Auswahl eines zur Reparatur des Kraftfahrzeugbauteils geeigneten Werkzeugs für die handhaltbare Zug- und Druckvorrichtung, nachdem sich Kraftfahrzeugbauteile, insbesondere eines Typs oftmals nur geringfügig, nämlich in nur wenigen Merkmalen voneinander unterscheiden.

Auch für den Fachmann stellt die Auswahl des geeigneten Werkzeugs somit eine große Herausforderung dar, welche mit einer hohen Fehleranfälligkeit belastet ist. Eine fehlerhafte Auswahl des zu ersetzenden Bauteils führt dann zu längeren Ausfallzeiten und höheren Kosten.

Hiervon ausgehend liegt der Erfindung die Aufgabe zugrunde, ein Verfahren zur Verwendung einer handhaltbaren Zug- und Druckvorrichtung zur Reparatur von Kraftfahrzeugbauteilen sowie ein System zur Durchführung des Verfahrens bereitzustellen, dass auf einfache Weise eine schnelle und zuverlässige Auswahl eines geeigneten Werkzeugs ermöglicht.

Die Erfindung löst die Aufgabe durch ein Verfahren mit den Merkmalen des Anspruchs 1 sowie ein System mit den Merkmalen des Anspruchs 9. Vorteilhafte Weiterbildungen sind in den abhängigen Ansprüchen angegeben.

Die handhaltbare Zug- und Druckvorrichtung weist eine einen akkubetriebenen Elektromotor aufweisende Antriebseinheit sowie einen mit dem Elektromotor verbundenen Gewindetrieb zum Übertragen von aus der Drehrichtung des Elektromotors resultierenden Zug- und Druckkräften auf eine Kopplungseinheit auf. Ferner weist die Zug- und Druckvorrichtung eine mit der Kopplungseinheit verbundene Werkzeugaufnahme auf.

Bei dem erfindungsgemäßen Verfahren zur Verwendung der handhaltbaren Zug- und Druckvorrichtung zur Reparatur von Kraftfahrzeugbauteilen werden die folgenden Verfahrensschritte ausgeführt:
- Identifizieren eines zu bearbeitenden Kraftfahrzeugbauteils mittels eines mobilen Handgeräts mit einer Anzeigeeinheit und einer Sende- und Empfangseinheit zur drahtlosen Datenübertragung von Informationen an eine Servereinheit;
- Auswählen eines für die Bearbeitung des identifizierten Kraftfahrzeugbauteils geeigneten Werkzeugs mittels des mobilen Handgeräts und/oder der Servereinheit;
- Darstellen von Informationen zu dem geeigneten Werkzeug auf der Anzeigeeinheit des mobilen Handgeräts;
- Anordnen des geeigneten Werkzeugs an der Werkzeugaufnahme der handhaltbaren Zug- und Druckvorrichtung;
- Bearbeiten des Kraftfahrzeugbauteils mittels der handhaltbaren Zug- und Druckvorrichtung.

Das erfindungsgemäße Verfahren zeichnet sich dadurch aus, dass dieses unter Verwendung eines mobilen Handgerätes eine einfache und zuverlässige Auswahl des geeigneten Werkzeugs ermöglicht. Hierzu weist das mobile Handgerät eine Anzeigeeinheit zum Darstellen von Informationen und eine Sende- und Empfangseinheit zur drahtlosen Datenübertragung von Informationen an eine Servereinheit auf.

Insbesondere bei der Verwendung des Verfahrens im Bereich von Reparaturbetrieben, insbesondere Kraftfahrzeugreparaturbetrieben kann dieses Verfahren dazu benutzt werden, um dem Werkstattmitarbeiter in einfacher, komfortabler sowie zuverlässiger Weise die Auswahl des geeigneten Werkzeugs für die handhaltbare Zug- und Druckvorrichtung zu erleichtern. Indem für das identifizierte Kraftfahrzeugbauteil mit dem mobilen Handgerät und/oder der Servereinheit ein geeignetes Werkzeug ausgewählt wird, wird der Zeitaufwand zum Einrichten der handhaltbaren Zug- und Druckvorrichtung sowie das Risiko der Auswahl falscher Werkzeuge reduziert. Hierdurch können die Reparaturzeit und somit die Kosten für die Bearbeitung und/oder Reparatur des Kraftfahrzeugbauteils reduziert werden.

Das defekte Kraftfahrzeugbauteil, beispielsweise ein Kabel, ein Rohr, ein Niet oder eine Crimpverbindung wird mittels des mobilen Handgeräts durch den Werkstattmitarbeite identifiziert. Anhand des identifizierten Kraftfahrzeugbauteils wird mittels des mobilen Handgeräts und/oder der über die Sende- und Empfangseinheit mit dem mobilen Handgerät kommunizierenden Servereinheit das für die Bearbeitung des identifizierten Kraftfahrzeugbauteils geeignete Werkzeug ausgewählt. Die Informationen zu dem geeigneten Werkzeug werden auf der Anzeigeeinheit des mobilen Handgeräts, beispielsweise in Form von schriftlichen, visuellen und/oder audiovisuellen Anweisungen, z.B. als Abbildungen oder Videos angezeigt. Der Werkstattmitarbeiter ordnet das zu den auf dem mobilen Handgerät angezeigten Informationen passende Werkzeug an der Werkzeugaufnahme der handhaltbaren Zug- und Druckvorrichtung an. Daraufhin beginnt der Bearbeitungsvorgang, in dem der Werkstattmitarbeiter das Kraftfahrzeugbauteil mittels der handhaltbaren Zug- und Druckvorrichtung bearbeitet, insbesondere repariert.

Der Werkstattmitarbeiter ist hierzu in der Lage, das entsprechende Werkzeug aus einem ggf. vorhandenen Werkzeugkoffer und/oder Lager zu entnehmen oder aber zu reservieren. Besonders vorteilhafterweise sind dabei bereits zu den auf der Anzeigeeinheit angegebenen Informationen auch Reservieroptionen angezeigt, wobei ganz besonders vorteilhafterweise der Werkstattmitarbeiter unmittelbar auf der Anzeigeeinheit die Möglichkeit hat, das gewünschte Werkzeug bspw. in einem EDV-System zu reservieren. Somit wird es dem Werkstattmitarbeiter in besonders komfortabler Weise ermöglicht, ein geeignetes Werkzeug zur Bearbeitung und/oder Reparatur eines defekten Kraftfahrzeugbauteils auszuwählen, das geeignete Werkzeug an der handhaltbaren Zug- und Druckvorrichtung anzuordnen oder dieses gegebenenfalls bei Bedarf für die Benutzung zu reservieren, beispielsweise indem an seinem Lagerplatz eine entsprechende Signaleinrichtung aktiviert wird, sodass dann die Bearbeitung und/oder Reparatur des defekten Kraftfahrzeugbauteils geplant werden oder innerhalb kürzester Zeit stattfinden kann.

Die Identifikation des zu bearbeitenden Kraftfahrzeugbauteils kann grundsätzlich in beliebiger Weise erfolgen, wobei der Werkstattmitarbeiter beispielsweise das mobile Handgerät dazu verwendet, in einer Datenbank auf der Servereinheit hinterlegte Abbilder zu identifizierender Kraftfahrzeugbauteile auf der Anzeigeeinheit des mobilen Handgeräts darzustellen und mit dem Kraftfahrzeugbauteil abzugleichen. Nach einer vorteilhaften Weiterbildung der Erfindung ist jedoch vorgesehen, dass zur Identifikation des Kraftfahrzeugbauteils ein elektronisches Abbild des zu identifizierenden Kraftfahrzeugbauteils mit einer Kameraeinheit des mobilen Handgeräts erstellt wird. Das elektronische Abbild wird über die Sende- und Empfangseinheit zur Identifikation des Kraftfahrzeugbauteils in der Servereinheit durch Abgleich mit in einer Datenbank hinterlegten Abbildern zu identifizierender Kraftfahrzeugbauteile an eine Auswerteinheit der Servereinheit übermittelt. Die zu dem identifizierten Kraftfahrzeugbauteil in der Datenbank hinterlegten Informationen zur Auswahl des geeigneten Werkzeugs werden an das Handgerät übermittelt.

Zur Erstellung des elektronischen Abbildes richtet der Werkstattmitarbeiter das Handgerät mit der Kameraeinheit auf das zu identifizierende Kraftfahrzeugbauteil. Nach der Erstellung des elektronischen Abbildes mit der Kameraeinheit des mobilen Handgeräts durch den Werkstattmitarbeiter wird dieses über die Sende- und Empfangseinheit an die Servereinheit übertragen. Innerhalb der Servereinheit erfolgt dann durch die Auswerteinheit ein Abgleich des elektronischen Abbildes mit den in der Datenbank der Servereinheit hinterlegten Abbildern, wobei die Daten zu einem übereinstimmenden, in der Datenbank hinterlegten Kraftfahrzeugbauteil, z.B. eine Produktbezeichnung des identifizierten Kraftfahrzeugbauteils, dann wiederum von der Servereinheit zur Auswahl des geeigneten Werkzeugs an das mobile Handgerät übertragen werden. Die drahtlose Datenübertragung erfolgt dabei bspw. über Bluetooth, ein Mobilfunknetz oder über eine WLAN-Verbindung innerhalb des Reparaturbetriebes. Auf der Anzeigeeinheit des mobilen Handgeräts, in der Regel einem elektronischen Display, werden vorzugsweise die Informationen zu dem identifizierten Kraftfahrzeugbauteil angezeigt.

Die Verwendung des mobilen Handgerätes ermöglicht eine einfache und zuverlässige Identifikation von Kraftfahrzeugbauteilen. Durch die Verknüpfung der Datenbank mit einer zentralen Servereinheit können mittels einer zentralen Aktualisierung der verknüpften Daten dem Nutzer immer aktuelle Informationen bereitgestellt werden. Es ist somit anders als im Falle einer nur lokal auf dem mobilen Handgerät ablaufenden Identifikation nicht erforderlich, die dann auf dem Handgerät hinterlegten Informationen regelmäßig zu aktualisieren.

Die Auswahl eines geeigneten Werkzeugs kann grundsätzlich in beliebiger Weise mittels des mobilen Handgeräts und/oder der Servereinheit erfolgen, wobei ein geeignetes Werkzeug beispielsweise durch eine manuelle Eingabe der auf der Anzeigeeinheit angezeigten Produktbezeichnung des identifizierten Kraftfahrzeugbauteils und einem Abgleich mit zu diesem Kraftfahrzeugbauteil auf dem mobilen Handgerät oder der Servereinheit hinterlegten Informationen ausgewählt wird. Nach einer vorteilhaften Weiterbildung der Erfindung ist jedoch vorgesehen, dass die Informationen zu dem für die Bearbeitung des Kraftfahrzeugbauteils geeigneten Werkzeug in der Datenbank hinterlegt sind, anhand des identifizierten Kraftfahrzeugbauteils mittels der Auswerteinheit das geeignete Werkzeug ausgewählt wird und die Informationen zum Darstellen auf der Anzeigeeinheit an das mobile Handgerät übertragen werden. Die Informationen zu einer geeigneten Werkzeugart, z.B. eines Presswerkzeugs sind bevorzugt mit den in der Datenbank hinterlegten elektronischen Abbildern der Kraftfahrzeugbauteile verknüpft, sodass nach der Identifizierung des Kraftfahrzeugbauteils mittels der Auswerteinheit lediglich die passende Größe des Werkzeugs und/oder ein passender Einsatz für das Werkzeug ausgewählt wird. Dadurch dass die Informationen für ein geeignetes Werkzeug ebenfalls in der Datenbank der Servereinheit hinterlegt sind und vorzugsweise mit den hinterlegten elektronischen Abbildern der Kraftfahrzeugbauteile verknüpft sind, wird eine besonders schnelle und zuverlässige Auswahl des geeigneten Werkzeugs ermöglicht. Die Informationen zu dem geeigneten Werkzeug werden nach der Auswahl durch die Auswerteinheit über die Sende- und Empfangseinheit des mobilen Handgeräts erfasst und auf der Anzeigeeinheit für den Werkstattmitarbeiter dargestellt, sodass zur Auswahl eines für die Bearbeitung des Kraftfahrzeugbauteils geeigneten Werkzeugs nur die Erstellung eines elektronischen Abbildes des Kraftfahrzeugbauteils mittels des mobilen Handgeräts durch den Werkstattmitarbeiter erforderlich ist.

Der Bearbeitungsvorgang, z.B. ein Zieh- oder Pressvorgang, kann beispielsweise mittels einer an der handhaltbaren Zug- und Druckvorrichtung angeordneten und mit der Antriebseinheit verbundenen Steuereinheit gesteuert werden. Hierzu ist die Steuereinheit vorzugsweise zur Steuerung der Zieh- und Pressvorgänge und/oderArchivierung der Zieh- und Pressvorgänge ausgebildet. So lassen sich über die Steuereinheit bspw. die jeweils vorgesehenen Zug- oder Druckkräfte in besonders einfacher Weise einstellen, sodass die Zieh- und Pressvorgänge besonders zuverlässig ausgeführt werden können. Die Steuereinheit kann auch dazu vorgesehen sein, die durchgeführten Zieh- und Pressvorgänge zu archivieren, sodass eine Protokollierung der durchgeführten Arbeiten zuverlässig erfolgen kann.

Die Steuereinheit ist besonders bevorzugt mit einer Sensoreinheit zur Überwachung der Zieh- und Pressvorgänge verbunden. Die Sensoreinheit kann dabei dazu ausgebildet sein, den Verstellweg, die Zieh- oder Presskräfte, das Drehmoment oder dergleichen zu überwachen, welches für die Durchführung der Arbeitsvorgänge und deren erfolgreichen Abschluss erforderlich ist.

Nach einer vorteilhaften Weiterbildung der Erfindung ist weiter vorgesehen, dass die handhaltbare Zug- und Druckvorrichtung zur Bearbeitung des Kraftfahrzeugbauteils mittels der Steuereinheit gesteuert wird, wobei die Steuereinheit über eine Kommunikationseinheit der handhaltbaren Zug- und Druckvorrichtung ein in der Datenbank der Servereinheit oder auf dem mobilen Handgerät für das geeignete Werkzeug hinterlegtes Programm über das mobile Handgerät abruft. Die Steuereinheit ist beispielsweise mit einem Display versehen, welches es dem Werkstattmitarbeiter ermöglicht, die handhaltbare Zug- und Druckvorrichtung auch unabhängig von dem mobilen Handgerät zu bedienen. Die Steuereinheit ist über die Kommunikationseinheit beispielsweise über ein Kabel oder bevorzugt kabellos, z.B. via Bluetooth oder über eine WLAN-Verbindung innerhalb des Reparaturbetriebs mit dem mobilen Handgerät und/oder über geeignete vorstehend beschriebene drahtlose Übertragungsmittel mit der zentralen Datenbank der Servereinheit verbunden.

Bevorzugt ist das Programm in der Servereinheit hinterlegt und mit den elektronischen Abbildern und/oder den Informationen zu dem geeigneten Werkzeug verknüpft. Das in der Servereinheit hinterlegte Programm wird besonders bevorzugt mit den Informationen zu dem identifizierten Kraftfahrzeugbauteil und/oder den Informationen zu dem geeigneten Werkzeug auf das mobile Handgerät und/oder die Kommunikationseinheit der handhaltbaren Zug- und Druckvorrichtung übertragen. Zum Steuern des Betriebsvorgangs wird das Programm beispielsweise auf dem mobilen Handgerät durchgeführt, sodass der Betriebsvorgang über eine dauerhafte Verbindung des mobilen Handgeräts mit der Kommunikationseinheit und der Steuereinheit gesteuert wird. Bevorzugt weist die Kommunikationseinheit einen ausreichenden Speicher für mindestens ein, bevorzugt mehrere Programme auf, sodass ein für ein geeignetes Werkzeug hinterlegtes Programm vor dem Beginn des Bearbeitungsvorgangs direkt von der Servereinheit oder mittelbar über das mobile Handgerät an den Speicher der Kommunikationseinheit übertragen und zumindest für den Ablauf des Programms in diesem gespeichert wird. Hierdurch kann Fehlern durch Verbindungsabbrüche entgegengewirkt werden. Besonders bevorzugt kann das von der Servereinheit an das mobile Handgerät übermittelte Programm vor der Übermittlung an die Kommunikationseinheit von dem Werkstattmitarbeiter angepasst werden, sodass beispielsweise ein von dem Programm abweichendes Drehmoment für den Elektromotor eingestellt oder alternative Zug- oder Druck-Ist-Kräfte definiert werden können.

Mit den in der Datenbank für verschiedene Werkzeuge hinterlegten Programmen kann automatisch für das geeignete Werkzeug das passende Steuerprogramm an das mobile Handgerät und/oder die Kommunikationseinheit der handhaltbaren Zug- und Druckvorrichtung übertragen werden. Die manuelle Einstellungsmöglichkeit des übertragenen Programms auf dem mobilen Handgerät ermöglicht dem Werkstattmitarbeiter im einzelnen Reparaturfall dennoch die Möglichkeit individueller Änderungen.

Die Ausgestaltung der in der Auswerteinheit durchgeführten Identifikation des Kraftfahrzeugbauteils kann grundsätzlich in beliebiger Weise erfolgen, wobei verschiedene Verfahren zur Objekterkennung angewendet werden können. Nach einer vorteilhaften Weiterbildung der Erfindung ist vorgesehen, dass zur Identifikation des Kraftfahrzeugbauteils in dem mobilen Handgerät oder in der Auswerteinheit durch eine automatische Formerfassung des elektronischen Abbildes der Formtyp des Kraftfahrzeugbauteils und/oder mindestens eine Objektkennzeichnung eines an dem zu identifizierenden Kraftfahrzeugbauteils angeordneten Kennzeichens ermittelt wird.

Im Falle der bspw. vorgesehenen Verwendung des Verfahrens zur Reparatur einer Crimpverbindung im Kraftfahrzeugbereich stellt der Formtyp dabei die äußere Form des Kabels und/oder der Crimpverbindung dar. Bei der Ermittlung der geometrischen Form des Kabels oder eines Crimpkontakts können bspw. dessen Durchmesser, Breite, Länge und/oder Höhe sowie die Form einer Hülse des Crimpkontakts ermittelt werden. Die ermittelten Objektmerkmale können dann mit den Objektmerkmalen der in der Datenbank hinterlegten elektrischen Abbilder der Kraftfahrzeugbauteile abgeglichen werden. Zusätzlich oder alternativ zur Mustererkennung über den Formtyp des Kraftfahrzeugbauteils sieht das weitergebildete Verfahren vor, dass bei oder vor der Erstellung des elektronischen Abbildes eine Objektkennzeichnung des zu identifizierenden Kraftfahrzeugbauteils ermittelt wird. Bei einer Objektkennzeichnung kann es sich dabei um bestimmte von der Form unabhängige Merkmale des zu identifizierenden Kraftfahrzeugbauteils handeln, bspw. spezielle Markierungen, Einprägungen sowie die farbliche Ausgestaltung, aber auch auf der Oberfläche angebrachte Etiketten oder dergleichen. Ferner ist die Objektkennzeichnung bevorzugt durch eine an dem Kraftfahrzeugbauteil angeordnete Codierung gebildet. Hierbei kann es sich neben einem zweidimensionalen Code, wie einem Barcode oder QR-Code, auch um einen dreidimensionalen Code handeln, der vorstehende Erhebungen, bspw. in Form von Punkten oder Stegen aufweist und die besonders vorteilhafterweise mit reflektierenden Beschichtungen versehen sind, sodass eine besonders zuverlässige Erkennung dieser Objektkennzeichnung im Rahmen der Erstellung des elektronischen Abbildes erfolgen kann.

Insbesondere bei einer kombinierten Erfassung des Formtyps und der Objektkennzeichnung kann die Identifikation des zu identifizierenden Kraftfahrzeugbauteils im Rahmen der Auswerteinheit durch Abgleich mit den in der Datenbank hinterlegten Kraftfahrzeugbauteilen besonders zuverlässig und zügig erfolgen, nachdem eine Fehlerkennung über eine zunehmende Anzahl übereinstimmender Merkmale reduziert werden kann.

Für die Auswahl eines geeigneten Werkzeugs ist neben der Wahl der passenden Werkzeugart auch die Wahl der passenden Werkzeuggröße entscheidend. Beispielsweise kann die Werkzeuggröße für eine Werkzeugart durch eine manuelle Messung eines kennzeichnenden Maßes des Kraftfahrzeugbauteils, z.B. für den Fall eines Kabels dessen Durchmessers, und die Eingabe in das mobile Handgerät durch den Werkstattmitarbeiter ermittelt werden. Nach einer vorteilhaften Weiterbildung der Erfindung ist jedoch vorgesehen, dass bei der Erstellung des elektronischen Abbildes die Größe des zu identifizierenden Kraftfahrzeugbauteils mittels einer Sensoreinheit des mobilen Handgeräts ermittelt wird. Die Sensoreinheit ist zum Beispiel als Abstandssensor oder als Bewegungssensor ausgebildet. Ferner kann die Sensoreinheit als LIDAR ausgebildet sein. Die Größe des zu identifizierenden Kraftfahrzeugbauteils kann bei der automatischen Formerfassung auch über mehrere zusammenwirkende Sensoreinheiten des mobilen Handgeräts ermittelt werden. Bei der Erstellung des elektronischen Abbildes wird die Größe des zu identifizierenden Kraftfahrzeugbauteils mittels der Sensoreinheit ermittelt und für die Identifikation des Kraftfahrzeugbauteils mit dem elektronischen Abbild an die Servereinheit übermittelt. Für die Auswahl des geeigneten Werkzeugs wird die ermittelte Größe des Kraftfahrzeugbauteils bevorzugt in der Auswerteinheit berücksichtigt, sodass Informationen über ein geeignetes Werkzeug passenden Werkzeugtyps und passender Werkzeuggröße für die Darstellung auf der Anzeigeeinheit an das mobile Handgerät übertragen werden. Durch die Größenerkennung des Kraftfahrzeugbauteils mittels der Sensoreinheit des mobilen Handgeräts kann das Risiko einer fehlerhaften Werkzeugauswahl weiter reduziert werden.

Nach einer vorteilhaften Weiterbildung der Erfindung ist vorgesehen, dass das mobile Handgerät vor der Reparatur des Kraftfahrzeugbauteils mit dem Fahrzeug verbunden wird, mittels des mobilen Handgeräts Fahrzeugdaten ausgelesen werden und basierend auf den Fahrzeugdaten auf der Anzeigeeinheit eine Bearbeitungshistorie des identifizierten und zu bearbeitenden Kraftfahrzeugbauteils angezeigt wird. Die Verbindung des mobilen Handgeräts mit dem Fahrzeug erfolgt bevorzugt über einen On-Board-Diagnosezugang (OBD) mittels einer Kabelverbindung oder drahtlos, z.B. mittels Bluetooth. Unter Fahrzeugdaten werden übliche zur Reparatur eines Fahrzeugs auszulesende Informationen, z.B. der Fahrzeugtyp, Fehlermeldungen oder die Reparaturhistorie des Fahrzeugs verstanden. In der Reparaturhistorie des Fahrzeugs ist die Bearbeitungshistorie bereits reparierter Kraftfahrzeugbauteile, beispielsweise des mittels des mobilen Handgeräts identifizierten Kraftfahrzeugbauteils hinterlegt.

Nach einer vorteilhaften Weiterbildung der Erfindung ist vorgesehen, dass zur Initialisierung des Bearbeitungsvorgangs des Kraftfahrzeugbauteils mittels der handhaltbaren Zug- und Druckvorrichtung zwei an der Zug- und Druckvorrichtung angeordnete Schaltelemente gleichzeitig betätigt werden. Hierbei wird unter gleichzeitig verstanden, dass beide Schaltelemente z.B. von dem Werkstattmitarbeiter zur gleichen Zeit betätigt werden. Hierzu sind die Schaltelemente bevorzugt mit der Steuereinheit verbunden. Ein erstes Schaltelement ist beispielsweise an einem Gehäusekörper der handhaltbaren Zug- und Druckvorrichtung angeordnet. Ein zweites Schaltelement ist z.B. ebenfalls an dem Gehäusekörper oder z.B. für den Fall eines Nietwerkzeugs bevorzugt an dem Nietbügel angeordnet.

Die Betätigung nur eines der Schaltelemente reicht nicht zur Initialisierung des Bearbeitungsvorgangs aus. Besonders bevorzugt wird auf dem Display der handhaltbaren Zug- und Druckvorrichtung eine visuelle Fehlermeldung angezeigt, falls nur eines der Schaltelemente betätigt wird. Alternativ oder zusätzlich wird über die mit der Steuereinheit verbundene Kommunikationseinheit eine Fehlermeldung an das mobile Handgerät übermittelt und visuell auf der Anzeigeeinheit und/oder audiovisuell in Verbindung mit einem Lautsprecher des mobilen Handgeräts wiedergegeben. Durch die gleichzeitige Betätigung der beiden Schaltelemente wird der Bearbeitungsvorgang zur Reparatur des identifizierten Kraftfahrzeugbauteils initialisiert und vorzugsweise das von der Servereinheit und/oder dem mobilen Handgerät abgerufene Programm für das ausgewählte und an der Werkzeugaufnahme angeordnete geeignete Werkzeug durchgeführt. Indem die Initialisierung des Bearbeitungsvorgangs die Betätigung von zwei Schaltelementen erfordert, kann auf vorteilhafte Weise einem unerwünschten, beispielsweise der Unachtsamkeit des Werkstattmitarbeiters geschuldeten, Initialisieren des Bearbeitungsvorgangs entgegengewirkt werden. Hierdurch wird gewährleistet, dass der Bearbeitungsvorgang erst nach Abschluss der Identifikation des Kraftfahrzeugbauteils und der Auswahl sowie Anordnung des geeigneten Werkzeugs erfolgt.

Das System zur Durchführung des erfindungsgemäßen Verfahrens weist neben der handhaltbaren Zug- und Druckvorrichtung das mobile Handgerät mit einer Kameraeinheit, einer Anzeigeeinheit und einer Sende- und Empfangseinheit zur drahtlosen Datenübertragung von Informationen an eine Servereinheit auf.

Der Gewindetrieb weist eine mit dem Elektromotor verbundene, verdrehbar an einem Gehäusekörper gelagerte Gewindespindel und eine verdrehbar auf der Gewindespindel und über eine Lagereinheit verdrehfest an dem Gehäusekörper gelagerte Gewindemutter auf. Die Kopplungseinheit ist derart mit der Gewindemutter verbunden, dass sowohl Zugals auch Druckkräfte, welche aus der Bewegungsrichtung der Gewindespindel und der sich daraus ergebenden linearen Verstellung der Gewindemutter ergeben, zuverlässig von der Gewindemutter über die Kopplungseinheit auf die Werkzeugaufnahme übertragen werden.

Zudem ist das System besonders vorteilhafterweise mit einer Servereinheit verbunden, die
- eine Datenbank mit hinterlegten Abbildern zu den zu identifizierenden Kraftfahrzeugbauteilen, Informationen zu Werkzeugen und Programmen zur Steuerung der handhaltbaren Zug- und Druckvorrichtung und
- eine Auswerteinheit zur Identifikation des Kraftfahrzeugbauteils in der Servereinheit durch Abgleich des zu übermittelnden Abbildes mit den in der Datenbank hinterlegten Abbildern sowie zur Auswahl eines geeigneten Werkzeugs
aufweist.

Das System weist mindestens zwei unterschiedliche Werkzeuge, z.B. ein Ziehwerkzeug und ein Presswerkzeug auf. Das Presswerkzeug ist bspw. als Nietdöpper ausgebildet, der in Verbindung mit einem an der Druckvorrichtung angeordneten Nietbügel zum Setzen von Nieten zum Einsatz kommt. Zudem ist das Presswerkzeug beispielsweise zum Pressen von Rohren und/oder Rohrverbindungen ausgebildet. Weiter ist das Presswerkzeug z.B. als Crimpstempel ausgebildet, der in Verbindung mit einer an der Druckvorrichtung angeordneten Crimpmatrize zum Herstellen einer Crimpverbindung zum Einsatz kommt. Bei der Verwendung als Zugvorrichtung ist an der Werkzeugaufnahme bspw. eine geeignete Klemmvorrichtung für einen Blindnietschaft oder andere Zugkräfte übertragende Mittel angeordnet. Alternativ oder ergänzend sind an der Werkzeugaufnahme beispielsweise entsprechende Ziehwerkzeuge angeordnet, wobei die Ziehwerkzeuge bspw. Klemmmittel, mittels derer dann die Zugkräfte übertragen werden können, aufweisen.

Das derart ausgestaltete System ermöglicht dem Nutzer allein mit dem mobilen Handgerät bspw. im Werkstattbetrieb, die Auswahl eines geeigneten Werkzeugs zur Bearbeitung und/oder Reparatur eines Kraftfahrzeugbauteils. Dieses kann z.B. im Kraftfahrzeugwerkstattbetrieb direkt am Fahrzeug erfolgen, ohne dass hierfür ein Ausbau erforderlich ist. Das mobile Handgerät zeichnet sich dabei durch seine hohe Flexibilität und Handhabbarkeit aus. Die Daten des zu identifizierenden Kraftfahrzeugbauteils werden als elektronisches Abbild direkt von dem Handgerät an die Servereinheit versendet, die bspw. lokal im Betrieb oder aber in einer Zentralstelle vorhanden sein kann, über die das Handgerät bspw. über Mobilfunkverbindung oder eine WLAN-Verbindung kommuniziert.

Das Handgerät des Systems ist bevorzugt zur manuellen Eingabe von Informationen ausgebildet. Dies ermöglicht bspw. dem Nutzer das für das geeignete Werkzeug an das mobile Handgerät übertragene Programm individuell anzupassen.

Besonders bevorzugt ist das mobile Handgerät durch ein Tablet oder ein Smartphone gebildet. Die Verwendung eines Smartphones zeichnet sich dabei dadurch aus, dass diese in der Regel bereits eine Anzeigeeinheit, eine Kameraeinheit sowie einen Bewegungssensor oder einen Abstandssensor aufweisen, sodass die Erstellung des elektronischen Abbildes mit der Größenerkennung des Kraftfahrzeugbauteils dann unter Verwendung einer auf dem Mobilgerät ablaufenden Programmapplikation (App) erfolgen kann. Während der Erstellung des elektronischen Abbildes können bspw. auf der Anzeigeeinheit des mobilen Gerätes durch die App, Rahmenlinien oder Anwendungshinweise eingeblendet werden.

Die App kann ferner eine Verknüpfung zu einem EDV-System herstellen, über die über das Smartphone dann in einfacher Weise direkt eine Reservierung des ausgewählten Werkzeugs für zukünftige Bearbeitungs- und/oder Reparaturarbeiten ausgeführt werden kann. Vorzugsweise ist die handhaltbare Zug- und Druckvorrichtung mit der App in Verbindung mit dem Smartphone durch den Werkstattmitarbeiter mittels einer Sprach- und/oder Gestensteuerung steuerbar. Der Datenaustausch zwischen der handhaltbaren Zug- und Druckvorrichtung und dem mobilen Handgerät erfolgt vorzugsweise zwischen der Kommunikationseinheit der handhaltbaren Zug- und Druckvorrichtung und der Sende- und Empfangseinheit des mobilen Handgeräts.

Bevorzugt weist das System eine Mehrzahl an Zieh- und Presswerkzeugen mit auswechselbaren Einsätzen auf. Die Einsätze weisen beispielsweise unterschiedliche Bauteilaufnahmen, insbesondere für Kraftfahrzeugbauteile auf. Eine Bauteilaufnahme ist ein freier Bereich des Einsatzes zur Anordnung des mit der Zug- und Druckvorrichtung zu bearbeitenden Kraftfahrzeugbauteils. Beispielsweise unterscheiden sich die Bauteilaufnahmen in Art und Größe durch unterschiedliche Geometrien, z.B. eine zylinderförmige Geometrie zur Aufnahme eines Kabels, eines Rohres oder einer Strebe. An einem als Crimpmatrize ausgebildeten Presswerkzeug sind beispielweise unterschiedliche Einsätze für gängige Kabeldurchmesser anordbar. Zusätzlich ist der Crimpstempel vorzugsweise mit verschiedenen Crimpstempeln zur Herstellung unterschiedlicher Crimpverbindungen, beispielsweise eines C-Crimps oder eines F-Crimps kombinierbar.

Die Mehrzahl an verschiedenen Zieh- und Presswerkzeugen ermöglicht einen breiten Anwendungsbereich für die handhaltbare Zug- und Druckvorrichtung. Die Einsätze gewährleisten durch die breite Abdeckung unterschiedlicher Geometrien verschiedener oder typgleicher Kraftfahrzeugbauteile für die Bearbeitung, insbesondere Reparatur verschiedener Kraftfahrzeugbauteile die Verwendung eines geeigneten Werkzeugs.

Ein Ausführungsbeispiel der Erfindung ist nachstehend mit Bezug auf die Zeichnungen erläutert. In den Zeichnungen zeigen:

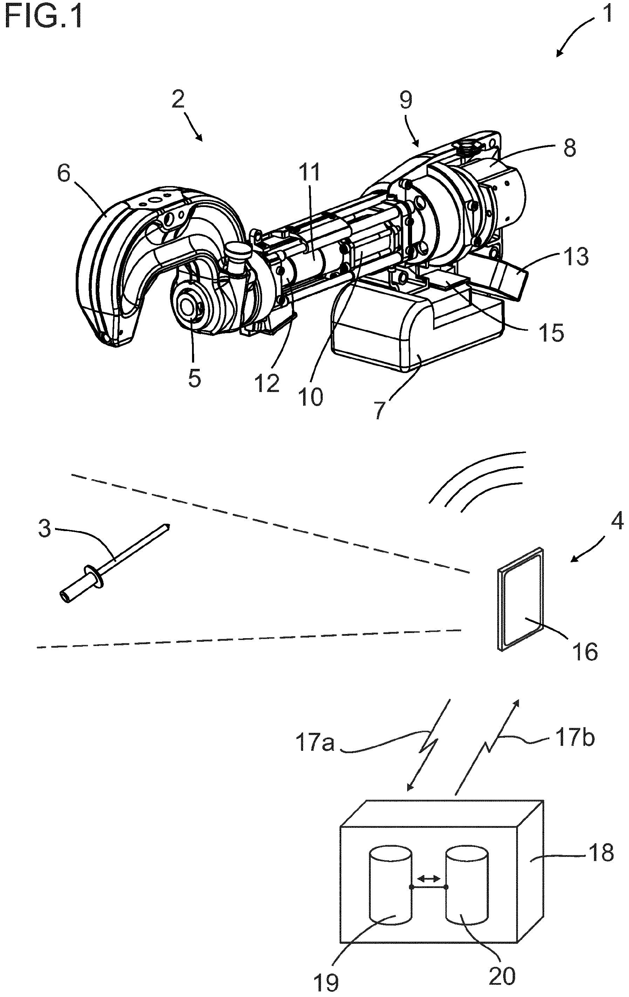

- Fig. 1: eine schematische Darstellung eines Systems zur Durchführung eines Verfahrens zur Verwendung einer handhaltbaren Zug- und Druckvorrichtung zur Reparatur von Kraftfahrzeugbauteilen.

Ein System 1 zur Durchführung eines Verfahrens zur Verwendung einer handhaltbaren Zug- und Druckvorrichtung 2 zur Reparatur von Kraftfahrzeugbauteilen 3 ist in Fig. 1 schematisch dargestellt. Das System 1 weist neben der handhaltbaren Zug- und Druckvorrichtung 2 ein als Smartphone 4 ausgebildetes mobiles Handgerät und eine Mehrzahl an Zieh- und Presswerkzeugen auf. In Fig.1 ist exemplarisch ein Presswerkzeug in Form eines Nietdöppers 5 in Verbindung mit einem Nietbügel 6 dargestellt.

Die handhaltbare Zug- und Druckvorrichtung 2 weist eine einen durch einen Akku 7 betriebenen Elektromotor 8 aufweisende Antriebseinheit 9 und einen mit dem Elektromotor 8 verbundenen Gewindetrieb 10 zum Übertragen von aus der Drehrichtung des Elektromotors 8 resultierenden Zug- und Druckkräften auf eine Kopplungseinheit 11 auf. Ferner weist die Zug- und Druckvorrichtung 2 eine mit der Kopplungseinheit 11 verbundene Werkzeugaufnahme 12 auf. Über die Kopplungseinheit 11 sind die Zug- und Druckkräfte auf die Werkzeugaufnahme 12 übertragbar.

An der handhaltbaren Zug- und Druckvorrichtung 2 sind weiter eine Steuereinheit 13 und eine mit der Steuereinheit 13 verbundene als Rotationsgeber ausgebildete Sensoreinheit zur Erfassung des Drehmoments des Elektromotors 8 angeordnet. Die Steuereinheit 13 ist mit einer Kommunikationseinheit 15 zum Datenaustausch mit dem Smartphone 4 verbunden.

Das Smartphone 4 weist eine Anzeigeeinheit in Form eines elektronischen Displays 16 zum Darstellen von Informationen und eine Sende- und Empfangseinheit zur drahtlosen Datenübertragung 17a, 17b von Informationen an eine Servereinheit 18 auf. Darüber hinaus weist das Smartphone 4 eine Kameraeinheit zur Erstellung eines elektronischen Abbildes eines zu identifizierenden Kraftfahrzeugbauteils 3 sowie einen Abstandssensor zum Ermitteln der Größe des Kraftfahrzeugbauteils 3 bei der Erstellung des elektronischen Abbildes auf.

Die Servereinheit 18 weist eine Datenbank 19 mit hinterlegten Abbildern zu Kraftfahrzeugbauteilen 3, Informationen zu Werkzeugen 5 und Programmen zur Steuerung der handhaltbaren Zug- und Druckvorrichtung 2 auf. Weiter weist die Servereinheit 18 eine Auswerteinheit 20 zur Identifikation des Kraftfahrzeugbauteils 3 in der Servereinheit 18 auf.

Für die Verwendung der handhaltbaren Zug- und Druckvorrichtung 2 zur Reparatur eines Kraftfahrzeugbauteils in Form eines hier exemplarisch dargestellten Niets 3 wird zunächst der Niet 3 mittels des Smartphones 4 identifiziert. Hierzu erstellt ein Nutzer mit der Kameraeinheit des Smartphones 4 ein elektronisches Abbild des Niets 3. Durch den Abstandssensor des Smartphones 4 wird bei der Erstellung des elektronischen Abbildes die Größe des Niets 3 ermittelt.

Das in dem Smartphone 4 erstellte elektronische Abbild wird über eine drahtlose Verbindung, bspw. eine Mobilfunkverbindung mit der ermittelten Größe des Niets 3 an die Servereinheit 18 übertragen, wobei die Datenübertragung 17a, 17b von dem Smartphone 4 zur Servereinheit 18 und umgekehrt erfolgen kann. Innerhalb der Servereinheit 18 wird das elektronische Abbild innerhalb der Auswerteinheit 20 analysiert und bspw. im Rahmen einer Formerfassung, vorliegend der Kantenform des Niets 3 mit den in der Datenbank 19 hinterlegten elektronischen Abbildern von Nieten 3 abgeglichen.

Informationen zu für die Bearbeitung unterschiedlicher Nieten geeigneter Werkzeugarten in Form von Nietdöppern sind mit den in der Datenbank 19 hinterlegten elektronischen Abbildern der Nieten verknüpft, sodass nach der Identifizierung des Niets 3 mittels der Auswerteinheit 20 anhand der ermittelten Größe des Niets 3 die passende Größe des Nietdöppers ermittelt wird. Zusätzlich ist in der Datenbank zu dem geeigneten Nietdöpper 5 ein Programm zur Steuerung der handhaltbaren Zug- und Druckvorrichtung 2 hinterlegt. Das Programm wird hierzu über die Sende- und Empfangseinheit des Smartphones 4 zusammen mit den Informationen zu dem identifizierten Niet 3 und dem zur Bearbeitung des Niets 3 geeigneten Nietdöppers 5 von der Servereinheit 18 abgerufen. Das Programm wird an die mit der Steuereinheit 13 verbundene Kommunikationseinheit 15 weitergeleitet und die Informationen zu dem identifizierten Niet 3 und dem zur Bearbeitung des Niets 3 geeigneten Nietdöppers 5 werden auf dem elektronischen Display 16 des Smartphones 4 angezeigt.

Durch den Nutzer, z.B. einen Werkstattmitarbeiter wird der zu den auf dem Smartphone 4 angezeigten Informationen passende Nietdöpper 5 an der Werkzeugaufnahme 12 der handhaltbaren Zug- und Druckvorrichtung 2 angeordnet. Daraufhin beginnt der Bearbeitungsvorgang, in dem der Werkstattmitarbeiter den Niet 3 mittels der handhaltbaren Zug- und Druckvorrichtung 2 an einem Karosserieteil befestigt. Die Steuereinheit 13 steuert den Bearbeitungsvorgang durch Ausführen des von der Servereinheit 18 abgerufenen Programms in Abhängigkeit von den Signalen des Rotationsgebers.

Der Schutzbereich der vorliegenden Erfindung ist durch die Ansprüche gegeben und wird durch die in der Beschreibung erläuterten oder in den Figuren gezeigten Merkmale nicht beschränkt.

### Bezugszeichenliste

- 1: System
- 2: handhaltbare Zug- und Druckvorrichtung
- 3: Kraftfahrzeugbauteil/Niet
- 4: Smartphone
- 5: Werkzeug/Nietdöpper
- 6: Nietbügel
- 7: Akku
- 8: Elektromotor
- 9: Antriebseinheit
- 10: Gewindetrieb
- 11: Kopplungseinheit
- 12: Werkzeugaufnahme
- 13: Steuereinheit
- 15: Kommunikationseinheit
- 16: Anzeigeeinheit/elektronisches Display
- 17a, 17b: drahtlose Datenübertragung
- 18: Servereinheit
- 19: Datenbank
- 20: Auswerteinheit

## Patentansprüche

1. Verfahren zur Verwendung einer handhaltbaren Zug- und Druckvorrichtung zur Reparatur von Kraftfahrzeugbauteilen, mit
- einer einen akkubetriebenen Elektromotor (8) aufweisenden Antriebseinheit (9),
- einem mit dem Elektromotor (8) verbundenen Gewindetrieb (10) zum Übertragen von aus der Drehrichtung des Elektromotors (8) resultierenden Zug- und Druckkräften auf eine Kopplungseinheit (11) und
- einer mit der Kopplungseinheit (11) verbundenen Werkzeugaufnahme (12),
mit den Schritten
- Identifizieren eines zu bearbeitenden Kraftfahrzeugbauteils (3) mittels eines mobilen Handgeräts (4) mit einer Anzeigeeinheit (16) und einer Sende- und Empfangseinheit zur drahtlosen Datenübertragung von Informationen an eine Servereinheit (18);
- Auswählen eines für die Bearbeitung des identifizierten Kraftfahrzeugbauteils (3) geeigneten Werkzeugs (5) mittels des mobilen Handgeräts (4) und/oder der Servereinheit (18);
- Darstellen von Informationen zu dem geeigneten Werkzeug (5) auf der Anzeigeeinheit (16) des mobilen Handgeräts (4);
- Anordnen des geeigneten Werkzeugs (5) an der Werkzeugaufnahme (12) der handhaltbaren Zug- und Druckvorrichtung (2);
- Bearbeiten des Kraftfahrzeugbauteils (3) mittels der handhaltbaren Zug- und Druckvorrichtung (2).

2. Verfahren nach Anspruch 1, **dadurch gekennzeichnet, dass** zur Identifikation des Kraftfahrzeugbauteils
- ein elektronisches Abbild des zu identifizierenden Kraftfahrzeugbauteils (3) mit einer Kameraeinheit des mobilen Handgeräts (4) erstellt wird,
- das elektronische Abbild über die Sende- und Empfangseinheit zur Identifikation des Kraftfahrzeugbauteils (3) in der Servereinheit (18) durch Abgleich mit in einer Datenbank (19) hinterlegten Abbildern zu identifizierender Kraftfahrzeugbauteile an eine Auswerteinheit (20) der Servereinheit (18) übermittelt wird und
- die zu dem identifizierten Kraftfahrzeugbauteil (3) in der Datenbank (19) hinterlegten Informationen zur Auswahl des geeigneten Werkzeugs (5) an das Handgerät (4) übermittelt werden.

3. Verfahren nach Anspruch 1 oder 2, **dadurch gekennzeichnet, dass** die Informationen zu dem für die Bearbeitung des Kraftfahrzeugbauteils (3) geeigneten Werkzeug (5) in der Datenbank (19) hinterlegt sind, anhand des identifizierten Kraftfahrzeugbauteils (3) mittels der Auswerteinheit (20) das geeignete Werkzeug (5) ausgewählt wird und die Informationen zum Darstellen auf der Anzeigeeinheit (16) an das mobile Handgerät (4) übertragen werden.

4. Verfahren nach einem oder mehrerer der vorhergehenden Ansprüche, **dadurch gekennzeichnet, dass** die handhaltbare Zug- und Druckvorrichtung (2) zur Bearbeitung des Kraftfahrzeugbauteils (3) mittels einer Steuereinheit (13) gesteuert wird, wobei die Steuereinheit (13) über eine Kommunikationseinheit (15) der handhaltbaren Zug- und Druckvorrichtung (2) ein in der Datenbank (19) der Servereinheit (18) oder auf dem mobilen Handgerät (4) für das geeignete Werkzeug (5) hinterlegtes Programm über das mobile Handgerät (4) abruft.

5. Verfahren nach einem oder mehrerer der vorhergehenden Ansprüche, **dadurch gekennzeichnet, dass** zur Identifikation des Kraftfahrzeugbauteils (3) in dem mobilen Handgerät (4) oder in der Auswerteinheit (20) durch eine automatische Formerfassung des elektronischen Abbildes der Formtyp des Kraftfahrzeugbauteils (3) und/oder mindestens eine Objektkennzeichnung eines an dem zu identifizierenden Kraftfahrzeugbauteils (3) angeordneten Kennzeichens ermittelt wird.

6. Verfahren nach einem oder mehrerer der vorhergehenden Ansprüche, **dadurch gekennzeichnet, dass** bei der Erstellung des elektronischen Abbildes die Größe des zu identifizierenden Kraftfahrzeugbauteils (3) mittels einer Sensoreinheit des mobilen Handgeräts (4) ermittelt wird.

7. Verfahren nach einem oder mehrerer der vorhergehenden Ansprüche, **dadurch gekennzeichnet, dass** das mobile Handgerät (4) vor der Reparatur des Kraftfahrzeugbauteils (3) mit dem Fahrzeug verbunden wird, mittels des mobilen Handgeräts (4) Fahrzeugdaten ausgelesen werden und basierend auf den Fahrzeugdaten auf der Anzeigeeinheit (16) eine Bearbeitungshistorie des identifizierten und zu bearbeitenden Kraftfahrzeugbauteils (3) angezeigt wird.

8. Verfahren nach einem oder mehrerer der vorhergehenden Ansprüche, **dadurch gekennzeichnet, dass** zur Initialisierung des Bearbeitungsvorgangs des Kraftfahrzeugbauteils (3) mittels der handhaltbaren Zug- und Druckvorrichtung (2) zwei an der Zug- und Druckvorrichtung (2) angeordnete Schaltelemente gleichzeitig betätigt werden.

9. System zur Durchführung eines Verfahrens zur Verwendung einer handhaltbaren Zug- und Druckvorrichtung zur Reparatur von Kraftfahrzeugbauteilen nach einem der Ansprüche 1 - 8, mit
- einer handhaltbaren Zug- und Druckvorrichtung (2) mit einer einen akkubetriebenen Elektromotor (8) aufweisenden Antriebseinheit (9), einem mit dem Elektromotor (8) verbundenen Gewindetrieb (10) zum Übertragen von aus der Drehrichtung des Elektromotors (8) resultierenden Zug- und Druckkräften auf eine Kopplungseinheit (11), und einer mit der Kopplungseinheit (11) verbundenen Werkzeugaufnahme,
- einem mobilen Handgerät (4) mit einer Kameraeinheit, einer Anzeigeeinheit (16) und einer Sende- und Empfangseinheit zur drahtlosen Datenübertragung von Informationen an eine Servereinheit (18), und
- mindestens zwei unterschiedlichen Werkzeugen (5).

10. System nach Anspruch 9, **gekennzeichnet durch** eine Mehrzahl an Zieh- und Presswerkzeugen (5) mit auswechselbaren Einsätzen.

## Claims

1. Method of using a handheldable pulling and compressing device for the repair of motor vehicle components, having
- a drive unit (9) comprising a battery-operated electric motor (8),
- a screw drive (10) connected to the electric motor (8) for transmitting tensile and compressive forces resulting from the direction of rotation of the electric motor (8) to a coupling unit (11), and
- a tool holder (12) connected to the coupling unit (11),
with the steps
- identifying a motor vehicle component (3) to be machined by means of a mobile handheld device (4) comprising a display unit (16) and a transmitting and receiving unit for wireless data transmission of information to a server unit (18);
- selecting a tool (5) suitable for machining the identified motor vehicle component (3) by means of the mobile handheld device (4) and/or the server unit (18);
- displaying information about the appropriate tool (5) on the display unit (16) of the mobile handheld device (4);
- arranging the appropriate tool (5) on the tool holder (12) of the handheldable pulling and compressing device (2);
- machining the motor vehicle component (3) by means of the handheldable pulling and compressing device (2).

2. Method according to claim 1, **characterized in that**, for identification of the motor vehicle component
- an electronic image of the motor vehicle component (3) to be identified is created with a camera unit of the mobile handheld device (4),
- the electronic image is transmitted to an evaluation unit (20) of the server unit (18) via the transmitting and receiving unit for identifying the motor vehicle component (3) in the server unit (18) by comparison with images of motor vehicle components to be identified stored in a database (19), and
- the information stored in the database (19) for the identified motor vehicle component (3) is transmitted to the handheld device (4) for selection of the suitable tool (5).

3. Method according to claim 1 or 2, **characterized in that** the information on the tool (5) suitable for machining the motor vehicle component (3) is stored in the database (19), the suitable tool (5) is selected by means of the evaluation unit (20) on the basis of the identified motor vehicle component (3), and the information is transmitted to the mobile handheld device (4) for display on the display unit (16).

4. Method according to one or more of the preceding claims, **characterized in that** the handheldable pulling and compressing device (2) for machining the motor vehicle component (3) is controlled by means of a control unit (13), the control unit (13) calling up a program stored in the database (19) of the server unit (18) or on the mobile handheld device (4) for the suitable tool (5) via a communication unit (15) of the handheldable pulling and compressing device (2) via the mobile handheld device (4).

5. Method according to one or more of the preceding claims, **characterized in that**, in order to identify the motor vehicle component (3) in the mobile handheld device (4) or in the evaluation unit (20), the shape type of the motor vehicle component (3) and/or at least one object marking of a label arranged on the motor vehicle component (3) to be identified is determined by automatic shape detection of the electronic image.

6. Method according to one or more of the preceding claims, **characterized in that** during the creation of the electronic image, the size of the motor vehicle component (3) to be identified is determined by means of a sensor unit of the mobile handheld device (4).

7. Method according to one or more of the preceding claims, **characterized in that** the mobile handheld device (4) is connected to the vehicle before the repair of the motor vehicle component (3), vehicle data is read out by means of the mobile handheld device (4), and a machining history of the motor vehicle component (3) identified and to be machined is displayed on the display unit (16) based on the vehicle data.

8. Method according to one or more of the preceding claims, **characterized in that** two switching elements arranged on the pulling and compressing device (2) are actuated simultaneously in order to initialize the machining operation of the motor vehicle component (3) by means of the handheldable pulling and compressing device (2).

9. System for carrying out a method of using a handheldable pulling and compressing device for the repair of motor vehicle components, according to any one of claims 1 - 8, comprising
- a handheldable pulling and compressing device (2) comprising a drive unit (9) having a battery-operated electric motor (8), a screw drive (10) connected to the electric motor (8) for transmitting tensile and compressive forces resulting from the direction of rotation of the electric motor (8) to a coupling unit (11), and a tool holder connected to the coupling unit (11),
- a mobile handheld device (4) with a camera unit, a display unit (16) and a transmitting and receiving unit for wireless data transmission of information to a server unit (18), and
- at least two different tools (5).

10. System according to claim 9, **characterized by** a plurality of pulling and compressing tools (5) with exchangeable inserts.

## Revendications

1. Procédé d'utilisation d'un dispositif portatif de traction et de compression pour la réparation de composants de véhicules automobiles, comportant
- une unité d'entraînement (9) comprenant un moteur électrique (8) alimenté par une batterie recherchable,
- un entraînement de filetage (10) relié au moteur électrique (8) pour transmettre les forces de traction et de compression résultant du sens de rotation du moteur électrique (8) à une unité de couplage (11), et
- un porte-outil (12) relié à l'unité de couplage (11),
avec les étapes
- l'identification d'un composant de véhicule automobile (3) à usiner au moyen d'un appareil à main mobile (4) comprenant une unité d'affichage (16) et une unité d'émission et de réception pour la transmission de données sans fil d'informations à une unité serveur (18) ;
- sélection d'un outil (5) adapté à l'usinage du composant de véhicule automobile identifié (3) au moyen de l'appareil à main mobile (4) et/ou de l'unité serveur (18) ;
- afficher les informations relatives à l'outil approprié (5) sur l'unité d'affichage (16) de l'appareil à main mobile (4) ;
- mise en place de l'outil approprié (5) sur le porte-outil (12) du dispositif portatif de traction et de compression (2) ;
- l'usinage du composant de véhicule automobile (3) au moyen du dispositif portatif de traction et de compression (2).

2. Procédé selon la revendication 1, **caractérisé en ce que**, pour l'identification du composant de véhicule automobile
- une image électronique du composant de véhicule automobile (3) à identifier est créée avec une unité de caméra de l'appareil main mobile (4),
- l'image électronique est transmise à une unité d'évaluation (20) de l'unité serveur (18) via l'unité de transmission et de réception pour identifier le composant de véhicule automobile (3) dans l'unité serveur (18) par comparaison avec des images de composants de véhicules automobiles à identifier stockées dans une base de données (19), et
- les informations stockées dans la base de données (19) pour le composant automobile identifié (3) sont transmises à l'appareil main mobile (4) pour la sélection de l'outil approprié (5).

3. Procédé selon la revendication 1 ou 2, **caractérisé en ce que** les informations sur l'outil (5) approprié pour l'usinage du composant automobile (3) est stockée dans la base de données (19), l'outil (5) approprié est sélectionné au moyen de l'unité d'évaluation (20) sur la base du composant automobile (3) identifié, et les informations sont transmises à l'appareil main mobile (4) pour être affichées sur l'unité d'affichage (16).

4. Procédé selon une ou plusieurs des revendications précédentes, **caractérisé en ce que** le dispositif portatif de traction et de compression (2) pour l'usinage du composant automobile (3) est commandé au moyen d'une unité de commande (13), selon lequel l'unité de commande (13) appelant un programme stocké dans la base de données (19) de l'unité serveur (18) ou sur l'appareil main mobile (4) pour l'outil approprié (5) via une unité de communication (15) du dispositif portatif de traction et de compression (2) par l'intermédiaire d'appareil main mobile (4).

5. Procédé selon une ou plusieurs des revendications précédentes, **caractérisé en ce que**, pour identifier le composant automobile (3) dans l'appareil main mobile (4) ou dans l'unité d'évaluation (20), le type de forme du composant automobile (3) est déterminé par reconnaissance automatique de la forme de l'image électronique et/ou au moins un marquage d'objet d'une étiquette disposée sur le composant automobile (3) à identifier est déterminé .

6. Procédé selon une ou plusieurs des revendications précédentes, **caractérisé en ce que** lors de la création de l'image électronique, la taille du composant de véhicule automobile (3) à identifier est déterminée au moyen d'une unité de capteur de l'appareil à main mobile (4).

7. Procédé selon une ou plusieurs des revendications précédentes, **caractérisé en ce que** l'appareil main mobile (4) est connecté au véhicule avant la réparation du composant automobile (3), les données du véhicule sont lues au moyen de l'appareil main mobile (4), et un historique d'usinage du composant automobile (3) identifié et à usiner est affiché sur l'unité d'affichage (16) sur la base des données du véhicule.

8. Procédé selon l'une ou plusieurs des revendications précédentes, **caractérisé en ce que** deux éléments de commutation disposés sur le dispositif de traction et de compression (2) sont actionnés simultanément afin d'initialiser l'opération d'usinage du composant de véhicule automobile (3) au moyen du dispositif portatif de traction et de compression (2).

9. Système pour la mise en œuvre d'un procédé d'utilisation d'un dispositif portatif de traction et de compression pour la réparation de composants de véhicules automobiles, selon l'une quelconque des revendications 1 - 8, comprenant
- un dispositif portatif de traction et de compression (2) comprenant une unité d'entraînement (9) dotée d'un moteur électrique (8) fonctionnant sur batterie recherchable, un entraînement de filetage (10) relié au moteur électrique (8) pour transmettre les forces de traction et de compression résultant du sens de rotation du moteur électrique (8) à une unité de couplage (11), et un porte-outil relié à l'unité de couplage (11),
- un appareil main mobile (4) doté d'une unité caméra, d'une unité affichage (16) et d'une unité de transmission et de réception pour la transmission de données sans fil d'informations à une unité serveur (18), et
- au moins deux outils différents (5).

10. Système selon la revendication 9, **caractérisé par** une pluralité d'outils de traction et de compression (5) avec des inserts interchangeables.
